Europäisches Patentamt

European Patent Office

Office européen des brevets

(11) Veröffentlichungsnummer : **0 416 679 B1**

(12) **EUROPÄISCHE PATENTSCHRIFT**

(45) Veröffentlichungstag der Patentschrift :
29.03.95 Patentblatt 95/13

(21) Anmeldenummer : 90202175.7

(22) Anmeldetag : 10.08.90

(51) Int. Cl.⁶ : **H04L 25/08**

(54) **Datenübertragungsanordnung mit einer differentiell betriebenen Datenübertragungsstrecke.**

(30) Priorität : **16.08.89 DE 3926885**

(43) Veröffentlichungstag der Anmeldung :
**13.03.91 Patentblatt 91/11**

(45) Bekanntmachung des Hinweises auf die
Patenterteilung :
**29.03.95 Patentblatt 95/13**

(84) Benannte Vertragsstaaten :
**DE FR GB**

(56) Entgegenhaltungen :
**EP-A- 0 239 731**
**US-A- 3 825 682**
**TOUTE L'ELECTRONIQUE, Band 43, Nr. 413,**
**August 1976, Seiten 51-56;**
**Ph. MAES: "Conception des lignes de trans-**
**mission de données"**

(73) Patentinhaber : **Philips Patentverwaltung**
**GmbH**
**Wendenstrasse 35c**
**D-20097 Hamburg (DE)**
㊷ **DE**
Patentinhaber : **Philips Electronics N.V.**
**Groenewoudseweg 1**
**NL-5621 BA Eindhoven (NL)**
㊷ **FR GB**

(72) Erfinder : **Eisele, Harald**
**Nedderfeld 6**
**D-2080 Pinneberg (DE)**

(74) Vertreter : **Kupfermann, Fritz-Joachim,**
**Dipl.-Ing. et al**
**Philips Patentverwaltung GmbH**
**Postfach 10 51 49**
**D-20035 Hamburg (DE)**

**Beschreibung**

Die Erfindung betrifft eine Datenübertragungsanordnung mit mindestens einer Versorgungsspannung ($U_B$), mit einem Sender, mit einem eine Komparatorschaltung enthaltenden Empfänger, mit einer differentiell betriebenen mit ihrem Wellenwiderstand abgeschlossenen zweidrahtigen Datenübertragungsstrecke, sowie mit einem Widerstandsnetzwerk, welches einerseits mit dem negativen und positiven Eingang der Komparatorschaltung und andererseits mit den Übertragungsdrähten der Datenübertragungsstrecke verbunden ist und an den Sender und die Datenübertragungsstrecke derart angepaßt ist, daß an den Eingängen der Komparatorschaltung gegensinnige Pegel und ein Absolutpegel bei Störung einer Übertragungsleitung erzeugt werden.

Eine solche Anordnung ist durch die US-A-38 25 682 bekannt. Dort besteht das dem Empfänger zugeordnete Widerstandsnetzwerk aus zwei Reihenschaltungen von Widerständen, von denen eine an eine positive und die andere an eine negative Versorgungsspannung angeschlossen ist. Die Mittelpunkte der Reihenschaltungen sind mit den Eingängen des Empfängers und mit den Leitungen der Datenübertragungsstrecke verbunden. Ein gleichartiges Netzwerk ist dem Sender zugeordnet.

Datenübertragungsanordnungen dienen in der Regel dazu, digitale Daten z.B. innerhalb einer elektronischen Datenverarbeitungsanlage zu übertragen. Ein vorhandener Sender gibt das zu übertragende Signal an eine Datenübertragungsstrecke ab, die ihrerseits mit einem Empfänger verbunden ist.

In einer einfachsten Version kann die Übertragungsstrecke aus nur einem Übertragungsdraht und der Empfänger aus einem Komparator mit einem festen Pegel beispielsweise an seinem positiven Eingang bestehen. Der Übertragungsdraht ist im Empfänger mit dem negativen Eingang des Komparators verbunden. Eine derartige Datenübertragungsanordnung ist jedoch durch induktive Ankopplungen gefährdet und kann dagegen nur mit einer aufwendigen Abschirmung geschützt werden. Bei Differenzen der Versorgungsspannungen im Sender und im Empfänger treten ebenfalls Probleme auf.

Aufwendigere Datenübertragungsanordnungen weisen daher zwei Übertragungsdrähte auf und werten deren Spannungsdifferenz über einen Komparator im Empfänger aus. Diese Anordnungen haben jedoch den Nachteil, daß sie nur bei Ankopplung beider Übertragungsdrähte ein Empfangssignal liefern. D.h. bei Störung durch z.B. den Bruch eines Übertragungsdrahtes ist kein Empfangssignal mehr zu erhalten.

Um diesen Nachteil zu vermeiden, ist es bekannt, zwei zusätzliche Trennkondensatoren vorzusehen. Hierdurch werden die Bezugspotentiale getrennt und es können nur noch Wechselspannungssignale, also nicht mehr beliebige Signale, wegen der Frequenzkopplung übertragen werden. Aus diesem Grund ist bei derartigen Anordnungen die zulässige Dauer ein und desselben Bitzustandes durch die Lade- bzw. Entladedauer der Kondensatoren vorgegeben, wodurch nur bestimmte Datenübertragungsprotokolle zulässig sind. Obgleich diese Anordnung bereits ein automatisches Einpegeln im Fall der Störung eines Übertragungsdrahtes gewährleistet, überwiegen doch deren Nachteile.

Eine weitere Anordnung ist bekannt, bei der keine Kondensatoren, sondern analoge Trennschalter verwendet werden. Bei dieser Anordnung ist kein automatisches Einpegeln im Fall der Störung eines Übertragungsdrahtes möglich. Die Schalter werden daher mittels einer Datenverarbeitungsanlage und eines entsprechenden Prüfprogramms geschaltet, was dann die Datenübertragung verzögert und überdies eine aufwendige Konzeption der Datenübertragungsanordnung darstellt.

Die bekannten Anordnungen bieten somit entweder keinen Eindrahtbetrieb oder sie beschränken sich auf Anwendungen mit bestimmten Datenübertragungsprotokollen oder bei Störung eines Übertragungsdrahtes wird die Datenübertragung stark verzögert.

Der vorliegenden Erfindung liegt die Aufgabe zugrunde, eine Datenübertragungsanordnung der eingangs genannten Art zu schaffen, die einen einfachen Aufbau aufweist, auch bei Störung eines Übertragungsdrahtes automatisch eine richtige Dekodierung des zu übertragenden Signals gewährleistet und für Datenraten bis 1MBit/s geeignet ist.

Erfindungsgemäß wird diese Aufgabe dadurch gelöst, daß ein Anpassungswiderstand des Empfängers eingangsseitig mit dem einen Übertragungsdraht und ausgangsseitig mit einem Spannungsteiler aus zwei Widerständen und dem negativen Eingang eines Koparators verbunden ist, und daß der andere Anpassungswiderstand des Empfängers eingangsseitig mit dem anderen Übertragungsdraht und ausgangsseitig mit einem Spannungsteiler aus zwei Widerständen und dem positiven Eingang des Komparators verbunden ist, der das Ausgangssignal des Empfängers liefert, wobei die Spannungsteiler aus den Versorgungsspannungen gespeist werden, deren Bezugspotentiale gleich sind.

Bei der differentiellen Datenübertragung ist die übertragene Nachricht als Spannungsdifferenz zwischen zwei Übertragungsdrähten codiert. Beispielsweise kann bei digitaler Datenübertragung eine Spannungsdifferenz von $U_o$ als Null und die entgegengesetzte Spannungsdifferenz $-U_o$ als Eins interpretiert werden. Die erfindungsgemäße Datenübertragungsstrecke stellt eine kombinierte Ein- und Zweidrahtübertragungsanordnung für differentielle serielle Datenübertragung dar und wandelt die zwischen den beiden Übertragungsdrähten bestehende Spannungsdifferenz derart um, daß mittels eines nachgeschalteten Komparators eines Empfängers das von einem Sender ausgehende Signal wieder zurückgewonnen werden kann.

Bei der erfindungsgemäßen Datenübertragungsanordnung ist das Detektieren des ausgesendeten Signals auch dann möglich, wenn der Empfänger z.B. infolge eines unterbrochenen Steckerkontaktes mit nur einem der beiden Übertragungsdrähte verbunden ist. Dies wird erfindungsgemäß durch einen bestimmten Aufbau in Form eines reinen Widerstandsnetzwerkes und einer speziellen Dimensionierung der Bauelemente, insbesondere der Widerstände, ermöglicht. Die erfindungsgemäße Datenübertragungsanordnung ist für dominante und rezessive Pegel gleichermaßen geeignet. Da auch bei Ankopplung von nur einem Übertragungsdraht bzw. nur einer Busleitung Nachrichten empfangen werden können, ist die Verfügbarkeit eines damit ausgerüsteten Systems erheblich erweitert, da es dadurch im Fahrzeugbereich, z.B. der Motorelektronik, des ABS, etc. oder im Bereich der Industrieelektronik eingesetzt werden kann.

Bei einer bevorzugten Ausgestaltung der Erfindung ist vorgesehen, daß der Sender zum Einkoppeln der Daten in die Datenübertragungsstrecke Transistoren, Dioden und Widerstände aufweist, wobei beispielsweise die Widerstände mit den Übertragungsdrähten verbunden sind.

Ferner kann vorgesehen sein, daß die Spannungsdifferenz zwischen den Übertragungsdrähten gegensinnige Pegel im Fall einer Datenübertragung annimmt und daß die Datenübertragungsstrecke an ihren Enden mit je einem dem Wellenwiderstand entsprechenden Abschlußwiderstand abgeschlossen ist, wodurch eine hohe Datenrate (größer als 1MBit/s) auch bei langen Übertragungsdrähten möglich ist. Gemäß einer bevorzugten Ausgestaltung ist vorgesehen, daß ein Anpassungswiderstand des Empfängers eingangsseitig mit dem einen Übertragungsdraht und ausgangsseitig mit einem Spannungsteiler aus zwei Widerständen und dem negativen Eingang eines Komparators verbunden ist und der andere Anpassungswiderstand des Empfängers eingangsseitig mit dem anderen Übertragungsdraht und ausgangsseitig mit einem weiteren Spannungsteiler aus zwei Widerständen und dem positiven Eingang des Komparators verbunden ist, der das Ausgangssignal des Empfängers liefert, wobei die Spannungsteiler aus der Versorgungsspannung gespeist werden.

Gemäß einer vorteilhaften Ausgestaltung wird über die Anpassungswiderstände eine Anpassung der Spannungsteiler derart gewährleistet, daß gegensinnige Pegel entstehen und bei Störung eines Übertragungsdrahtes sich automatisch an einem der Komparatoreingänge ein Absolutpegel, also ein fester Vergleichspegel im Empfänger einstellt. Die Spannungsteiler werden dabei aus den Widerständen des Senders und der Übertragungsstrecke einerseits und den Spannungsteilern des Empfängers andererseits gebildet.

Ferner kann vorteilhaft vorgesehen sein, daß der Sender und die Datenübertragungsstrecke zwischen den Potentialen der Versorgungsspannung ein Widerstandsnetzwerk aufweist, das aus einer Reihenschaltung eines ersten Widerstands des Senders und einer Parallelschaltung der Abschlußwiderstände und des weiteren Widerstands des Senders besteht, und daß die Anpassungswiderstände des Empfängers vor bzw. hinter der Parallelschaltung der Abschlußwiderstände angeschlossen sind. Vorteilhaft kann vorgesehen sein, daß bei Übertragung von rezessiven Pegeln bei sperrenden Transistoren des Senders an jedem Übertragungsdraht etwa die halbe Versorgungsspannung anliegt und daß bei dominanten Pegeln bei leitenden Transistoren die Versorgungsspannung symmetrisch zur halben Versorgungsspannung auf die Übertragungsdrähte verteilt ist. Ferner, daß über die Spannungsteiler im Empfänger die Spannungen $U_3$ und $U_4$ am Eingang des Komparators festgelegt werden, und bei Symmetrie des Empfängers, d.h., daß die Quotienten aus jeweils dem Produkt und der Summe der Widerstände der beiden Spannungsteiler im Empfänger einander entsprechen und einen Ersatzwiderstand $R_{E1}$ bilden, ein automatisches Einpegeln bei Störung eines Übertragungsdrahtes gewährleistet ist, wenn beide Anpassungswiderstände kleiner/gleich $R_{E1}$ $((U_{1d} - U_3)/(U_4 - U_3 + U_K) - 1)$ sind und der kleinste zulässige Wert für die Anpassungswiderstände größer/gleich $R_{E1}(U_K/(U_4 - U_3 - U_K)) - R_{E2}/2$ ist, wobei $U_{1d}$ die Spannung $U_1$ eines Übertragungsdrahtes im Fall eines dominanten Pegels, $U_3$ die Spannung am negativen Eingang und $U_4$ die Spannung am positiven Eingang des Komparators des Empfängers (bei an- und abgetrenntem Bus), $U_K$ die Spannung zwischen den Komparatoreingängen und $R_{E2}$ der Quotient aus dem Produkt und der Summe der Abschlußwiderstände der Datenübertragungsstrecke ist.

Weitere bevorzugte Ausgestaltungen der erfindungsgemäßen Datenübertragungsanordnung ergeben sich aus den Unteransprüchen.

Ein Ausführungsbeispiel der Erfindung wird nachfolgend unter Bezugnahme auf eine Zeichnung näher erläutert. Es zeigt:

Fig. 1 eine erfindungsgemäße Datenübertragungsanordnung,

Fig. 2 den Pegeleingang eines Komparators eines Empfängers bei ungestörter Datenübertragungsstrecke und

Fig. 3 die Pegel am Eingang des Komparators des Empfängers bei gestörter Übertragungsstrecke.

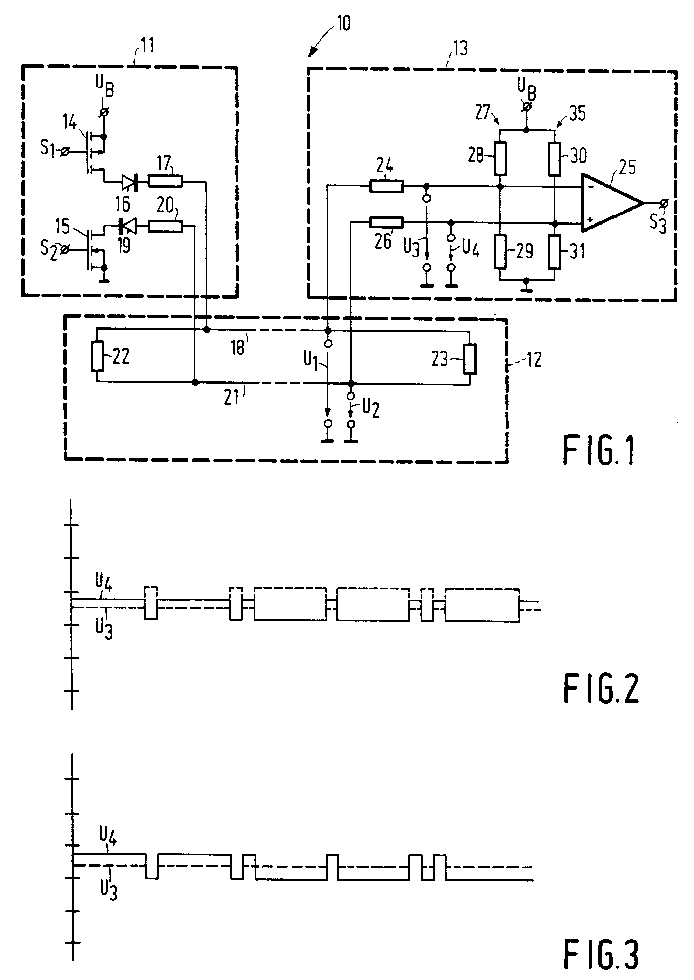

Fig. 1 zeigt eine Datenübertragungsanordnung 10, bestehend aus einem Sender 11, einer Übertragungsstrecke 12 und einem Empfänger 13. Der Sender 11 weist zwei Transistoren 14 und 15 auf, an deren Gates die gegensinnigen übertragenden Signale $S_1$ und $S_2$ anliegen. Der Transistor 14 ist mit dem positiven Pol einer Versorgungsspannung $U_B$ und ferner mit der Anode einer Diode 16 verbunden. Die Kathode der Diode 16 ist mit einem Widerstand 17 verbunden, der seinerseits mit einem Übertragungsdraht (bzw. einer Busleitung) 18 der Datenübertragungsstrecke 12 verbunden ist. Der Transistor 15 ist sourceseitig mit Masse und drainseitig mit der Kathode einer Diode 19 verbunden, die anodenseitig über einen Widerstand 20 an einem weiteren Übertragungsdraht 21 der Datenübertragungsstrecke 12 angeschlossen ist. Die Transistoren 14, 15 sind vorzugsweise MOS-Fet-Transistoren, wobei Transistor 14 ein P-Kanal-Transistor und Transistor 15 ein N-Kanal-Transistor ist. Es können allerdings auch Bipolartransistoren eingesetzt werden.

Die Übertragungsdrähte 18 und 21 der Datenübertragungsstrecke 12 weisen an ihren Enden Abschlußwiderstände 22 und 23 auf. Der Betrag des Widerstandswerts der Abschlußwiderstände 22 und 23 entspricht vorzugweise dem Wellenwiderstand der Übertragungsdrähte 18 und 21. Der Übertragungsdraht 18 ist über einen Anpassungswiderstand 24 mit dem Minuspol eines Komparators 25 des Empfängers 13 verbunden. Der Übertragungsdraht 21 ist über einen Anpassungswiderstand 26 mit dem positiven Eingang des Komparators 25 verbunden, an dessen Ausgang das detektierte Signal $S_3$ zur Verfügung steht. Die Spannung des Übertragungsdrahtes 18 gegenüber Masse ist mit $U_1$ und die des Übertragungsdrahtes 21 mit $U_2$ bezeichnet.

Der Empfänger 13 enthält ferner zwei Spannungsteiler 27 und 35, die von der Versorgungsspannung $U_B$ gespeist werden. Der Spannungsteiler 27 weist zwei Widerstände 28 und 29 auf, deren geteilte Spannung $U_3$ am negativen Pol des Komparators 25 anliegt. Der Spannungsteiler 35 weist zwei Widerstände 30 und 31 auf, deren geteilte Spannung $U_4$ am positiven Pol des Komparators 25 anliegt.

Diesen Spannungsteilern 27 und 35 des Empfängers stehen Spannungsteiler aus den Widerständen des Senders 11 und der Datenübertragungsstrecke 12 gegenüber und können erfindungsgemäß über die Anpassungswiderstände 24 und 26 des Empfängers 13 derart aneinander angepaßt werden, daß die differentielle Datenübertragung mit Hilfe von Spannungsdifferenzen bei Störung von einem der Übertragungsdrähte 18 bzw. 21 automatisch in eine Eindrahtübertragungsanordnung überführt wird und ein fester Bezugspegel (Absolutpegel) am Komparator 25 zur Verfügung steht. Der Empfang ist somit auch bei Ankopplung von nur einem Übertragungsdraht 18 oder 21 an dem Empfänger 13 möglich. Da die Übertragungsstrecke 12 mit Abschlußwiderständen 22 und 23 entsprechend ihrem Wellenwidestand abgeschlossen ist, ist vorteilhaft eine Datenrate von einigen MBit/s möglich, auch wenn die Übertragungsdrähte 18 und 21 lang sind im Vergleich zur Wellenlänge des übertragenen Signals.

Eine erfindungsgemäße Dimensionierung der erfindungsgemäßen Datenübertragungsanordnung gemäß Fig. 1 kann wie folgt gefunden werden. Bei vorgegebenen Werten für die Versorgungsspannung $U_B$, den Widerständen 17, 20, 22 und 23 des Senders 11 und der Übertragungsstrecke 12, sowie den Widerständen 28, 29, 30 und 31 des Empfängers 13 ergibt sich eine Dimensionierung für die Anpassungswiderstände 24 und 26, so daß die Forderung nach Eindrahtübertragung erfüllt ist. Bei passiven Sendern, d.h. sperrenden Transistoren und einem rezessiven Signal, entsprechen die Spannungen $U_1$ und $U_2$ der Übertragungsdrähte 18 und 21 etwa jeweils der halben Versorgungsspannung $U_B$. Bei aktiven Sendern, d.h. leitenden Transistoren 14 und 15 und dominanten Signalen, ist die Versorgungsspannung symmetrisch zur halben Versorgungsspannung auf die Spannungen $U_1$ und $U_2$ der Übertragungsdrähte 18 und 21 aufgeteilt. Das minimal erforderliche Differenzsignal $U_4 - U_3$ am Eingang des Komparators 25 des Empfängers 13 entspricht $U_K$. Mit den Hilfsgrößen $U_3 = U_B (R_{29}/(R_{28}+R_{29}))$ und $U_4 = U_B (R_{31}/(R_{30}+R_{31}))$ mit $U_4$ größer als $U_3$ und dem Ersatzwiderstand $R_{E1} = R_{28} R_{29}/(R_{28}+R_{29}) = R_{30} R_{31}/(R_{30}+R_{31})$ ist die Anforderung für Eindrahtempfang erfüllt, wenn $R_{24}=R_{26} \leq R_{E1} ((U_{1d}-U_3)/(U_4 U_3 + UK) - 1)$. Der kleinste zulässige Wert für die Anpassungswiderstände 24 und 26 ergibt sich, wenn $R_{24}=R_{26} \geq R_{E1}(U_K/(U_4-U_3-U_K)-R_{E2}/2$ Mit $R_{E2}=R_{23}R_{22}/(R_{23}+R_{22})$.

Durch Einhaltung dieser Dimensionierungsvorschrift ist eine erfindungsgemäße Anpassung der Widerstandsnetzwerke des Senders 11 und der Übertragungsstrecke 12 an die des Empfängers 13 gewährleistet. Für den Fall, daß die vorgenannten Beziehungen zueinander im Widerspruch stehen, kann es erforderlich sein, die Widerstände 17 und 20 zu verringern, bzw. die Abschlußwiderstände 22 und 23 zu vergrößern, sowie die Versorgungsspannung $U_B$ zu vergrößern bzw. die Widerstände 28, 29, 30 und 31 neu anzupassen, so daß bei abgetrenntem Bus $U_4$ minus $U_3$ gleich konstant gilt, bzw. ein Komparator 25 mit höherer Empfindlichkeit gewählt wird.

Fig. 2 zeigt den gegensinnigen Pegelverlauf der Spannungen $U_3$ und $U_4$ im Empfänger 13, die bei ungestörter Übertragungsstrecke 12 dem Komparator 25 zum Detektieren zugeführt werden.

Fig. 3 zeigt den Verlauf der Spannungen $U_3$ und $U_4$, bei Störung des Übertragungsdrahtes 18 der Übertragungsstrecke 12. Auch dieses Signal kann vom Komparator 25 des Empfängers 13 in gleicher Weise richtig detektiert werden, da der gestrichelt dargestellte Spannungspegel $U_3$ jetzt als absoluter Vergleichspegel zum Detektieren zur Verfügung steht.

Die in der vorstehenden Beschreibung, in den Figuren 1, 2 und 3 sowie in den Ansprüchen offenbarten Merkmale der Erfindung können sowohl einzeln als auch in beliebiger Kombination für die Verwirklichung der Erfindung in den verschiedenen Ausführungsformen wesentlich sein.

## Patentansprüche

1. Datenübertragungsanordnung mit mindestens einer Versorgungsspannung ($U_B$), mit einem Sender (11), mit einem eine Komparatorschaltung (25) enthaltenden Empfänger (13), mit einer differentiell betriebenen und mit ihrem Wellenwiderstand abgeschlossenen zweidrahtigen Datenübertragungsstrecke (12), sowie mit einem Widerstandsnetzwerk, welches einerseits mit dem negativen und positiven Eingang der Komparatorschaltung (25) und andererseits mit den Übertragungsdrähten (18,21) der Datenübertragungsstrecke (12) verbunden ist und an den Sender (11) und die Datenübertragungsstrecke (12) derart angepaßt ist, daß an den Eingängen der Komparatorschaltung (25) gegensinnige Pegel und ein Absolutpegel bei Störung einer Übertragungsleitung erzeugt werden,
dadurch gekennzeichnet, daß ein Anpassungswiderstand (24) des Empfängers (13) eingangsseitig mit dem einen Übertragungsdraht (18) und ausgangsseitig mit einem Spannungsteiler (27) aus zwei Widerständen (28,29) und dem negativen Eingang eines Komparators (25) verbunden ist, und daß der andere Anpassungswiderstand (26) des Empfängers (13) eingangsseitig mit dem anderen Übertragungsdraht (21) und ausgangsseitig mit einem Spannungsteiler (35) aus zwei Widerständen (30,31) und dem positiven Eingang des Komparators (25) verbunden ist, der das Ausgangssignal des Empfängers (13) liefert, wobei die Spannungsteiler (27,35) aus den Versorgungsspannungen gespeist werden, deren Bezugspotentiale gleich sind.

2. Datenübertragungsanordnung nach Anspruch 1, dadurch gekennzeichnet, daß der Sender (11) zum Einkoppeln der Daten in die Datenübertragungsstrecke (12) Transistoren (14,15) und je Transistor (14,15) eine Reihenschaltung aus Dioden (16,19) und Widerständen (17,20) aufweist, wobei jede der Reihenschaltungen mit den Übertragungsdrähten (18,21) der Übertragungsstrecke (12) verbunden sind.

3. Datenübertragungsanordnung nach Anspruch 2, dadurch gekennzeichnet, daß die Spannungsdifferenz zwischen den Übertragungsdrähten (18,21) gegensinnige Pegel im Fall einer Datenübertragung annimmt, und daß die Datenübertragungsstrecke (12) an ihren Enden mit je einem dem Wellenwiderstand entsprechenden Abschlußwiderstand (22,23) abgeschlossen ist.

4. Datenübertragungsanordnung nach Anspruch 3, dadurch gekennzeichnet, daß über die Anpassungswiderstände (24,26) eine Anpassung der Spannungsteiler, gebildet aus den Widerständen (17,20) des Senders (11) und der Übertragungsstrecke (12) und den Spannungsteilern (27,35) des Empfängers (13), derart gewährleistet ist, daß gegensinnige Pegel entstehen und bei Störung eines Übertragungsdrahtes (18) oder (21) sich automatisch ein Absolutpegel am Komparator (25) einpegelt.

5. Datenübertragungsanordnung nach Anspruch 4, dadurch gekennzeichnet, daß der Sender (11) und die Datenübertragungsstrecke (12) zwischen den Potentialen der Versorgungsspannung ($U_B$) ein Widerstandsnetzwerk aufweist, das aus einer Reihenschaltung aus einem Widerstand (17) des Senders (11), einer Parallelschaltung der Abschlußwiderstände (22,23) und dem weiteren Widerstand (20) des Senders (11) besteht, und daß die Anpassungswiderstände (24,26) des Empfängers (13) vor bzw. hinter der Parallelschaltung aus den Abschlußwiderständen (22,23) angeschlossen sind.

6. Datenübertragungsanordnung nach einem oder mehreren der vorhergehenden Ansprüche, dadurch gekennzeichnet, daß bei Übertragung von rezessiven Pegeln bei sperrenden Transistoren (14,15) des Senders (11) an jedem Übertragungsdraht (18,21) etwa die halbe Versorgungsspannung ($U_B$) anliegt und daß bei dominanten Pegeln bei leitenden Transistoren (14,15) eine zur halben Versorgungsspannung ($U_B$) symmetrische Spannung an den Übertragungsdrähten (18,21) anliegt.

7. Datenübertragungsanordnung nach Anspruch 6, dadurch gekennzeichnet, daß mit den Hilfsgrößen $U_3=U_B R29/(R28+29)$, $U4=U_B R31/(R30+R31)$ mit U4 größer als $U_3$ und dem Ersatzwiderstand $R_{E1}=R28\ R29/(R28+R29)=R30\ R31/(R30+R31)$ und dem weiteren Ersatzwiderstand $R_{E2}=R23\ R22/(R23+R22)$ ein automatisches Einpegeln bei Störung eines Übertragungsdrahtes (18 oder 21) gewährleistet ist, wenn $R24=R26\leqq R_{E1}((U1d-U3)/(U4-U3+U_K)-1)$ gilt, wobei der kleinste zulässige Wert für die Anpassungswiderstände (24,25) aus der Bedingung $R_{24}=R_{26}\geqq R_{E1}U_K/(U4-U3-U_K)-R_{E2}/2$ folgt, wobei $U_K$ die Eingangsspannung des Komparators (25) und $U_{1d}$ die Spannung U1 bei dominantem Signal repräsentiert.

**8.** Datenübertragungsanordnung nach einem oder mehreren der vorhergehenden Ansprüche, <u>dadurch gekennzeichnet,</u> daß die übertragenen Datenraten, bei bezüglich der Wellenlänge langen Übertragungsleitungen, im Übertragungsgeschwindigkeitsbereich von einigen MBit/s liegen.

**9.** Datenübertragungsanordnung nach einem oder mehreren der vorhergehenden Ansprüche, <u>dadurch gekennzeichnet,</u> daß die Abschlußwiderstände (22,23) von dem Wert des Wellenwiderstandes abweichen, und daß in Abhängigkeit der Versorgungsspannung ($U_B$), der Art der Transistoren (14,15), der Dioden (16,19) und des Komparators (15) höhere Datenraten als einige MBits/s zulässig sind.

**Claims**

**1.** A data transmission device with at least a supply voltage ($U_B$), a transmitter (11), a receiver (13) including a comparator circuit (25), a two-wire data transmission link (12) operated in the differential mode and terminated by its characteristic impedance, and also a resistance network which is connected on the one side to the negative input and the positive input of the comparator circuit (25) and on the other side to the transmission wires (18, 21) of the data transmission link (12) and which is matched with the transmitter (11) and the data transmission link (12) in such a manner that opposite levels are produced on the inputs of the comparator circuit (25 and an absolute level is produced in the case of disturbance of a transmission line, <u>characterized in that</u> one matching resistor (24) of the receiver (13) is connected to one transmission wire (18) at the input side and to a voltage divider (27) consisting of two resistors (28, 29) and to the negative input of a comparator (25) at the output side, and that the other matching resistor (26) of the receiver (13) is connected to the other transmission wire (21) at the input side and to a voltage divider (35) consisting of two resistors (30, 31) and to the positive input of the comparator (25) at the output side, said comparator supplying the input of the comparator (25) at the output side, said comparator supplying the output signal of the receiver (13) and the voltage dividers (27, 35) being fed by the supply voltages whose reference potential are equal.

**2.** A data transmission device as claimed in Claim 1, <u>characterized in that</u> for coupling the data into the data transmission link (12) the transmitter (11) comprises transistors (14, 15), each transistor (14, 15) comprising a series connection of diodes (16, 19) and resistors (17, 20), each of the series connections being connected to the transmission wires (18, 21) of the transmission link (12).

**3.** A data transmission device as claimed in Claim 2, <u>characterized in that</u> the voltage difference between the transmission wires (18, 21) assumes opposite levels in the case of a data transmission, and in that the data transmission link (12) is terminated at its ends by a respective terminating resistor (22, 23), corresponding to the characteristic impedance.

**4.** A data transmission device as claimed in Claim 3, <u>characterized in that</u> via the matching resistors (24, 26) a matching of the voltage dividers, constituted by the resistors (17, 20) of the transmitter (11) and of the transmission link (12) and by the voltage dividers (27, 35) of the receiver (13), is guaranteed in such a manner that opposite levels are obtained and an absolute level is automatically adjusted in the comparator (25) in the case of disturbance of a transmission wire (18) or (21).

**5.** A data transmission device as claimed in Claim 4, <u>characterized in that</u> the transmitter (11) and the data transmission link (12) comprises between the potentials of the supply voltage source ($U_B$), a resistance network which consists of a series connection of a resistor (17) of the transmitter (11), a parallel connection of the terminating resistors (22, 23) and the further resistor (20) of the transmitter (11), and in that the matching resistors (24, 26) of the receiver (13) are connected before and behind the parallel connection of the terminating resistors (22, 23).

**6.** A data transmission device as claimed in one or more of the preceding Claims, <u>characterized in that</u> in the case of transmission of recessive levels with non-conducting transistors (14, 15) of the transmitter (11), approximately half the supply voltage ($U_B$) is applied to each transmission wire (18, 21), and in that in the case of dominant levels with conducting transistors (14, 15) a voltage symmetrical with respect to half the supply voltage ($U_B$) is applied to the transmission wires (18, 21).

**7.** A data transmission device as claimed in Claim 6, <u>characterized in that</u> the auxiliary quantities
$$U_3 = U_B R_{29}/(R_{28} + R_{29}), \quad U_4 = U_B R_{31}/(R_{30} + R_{31})$$
where $U_4$ is larger than $U_3$, and the equivalent resistance
$$R_{E1} = R_{28} R_{29}/(R_{28} + R_{29}) = R_{30} R_{31}/(R_{30} + R_{31})$$

and the further equivalent resistance

$$R_{E2} = R_{23} R_{22}/(R_{23} + R_{22})$$

ensure an automatic level adjustment in the case of disturbance of a transmission wire (18 or 21) if it holds that

$$R_{24} = R_{26} \leqq R_{E1}((U_{1d} - U_3)/(U_4 - U_3 + U_K) - 1),$$

the smallest admissible value for the matching resistors (24, 25) then following from the condition

$$R_{24} = R_{26} \geqq R_{E1} U_K/(U_4 - U_3 - U_K) - R_{E2}/2,$$

where $U_K$ is the input voltage of the comparator (25) and $U_{1d}$ is the voltage $U_1$ in the case of a dominant signal.

8. A data transmission device as claimed in one or more of the preceding Claims, characterized in that the data rates transmitted are in the transmission speed range of a few Mbit/s, in the case of transmission lines which are long in comparison with the wavelength.

9. A data transmission device as claimed in one or more of the preceding Claims, characterized in that the terminating resistors (22, 23) deviate from the value of the characteristic impedance and that in dependence upon the supply voltage ($U_B$), the type of the transistors (14, 15), the type of the diodes (16, 19) and the type of comparator (15), data rates higher than a few Mbit/s are admissible.

**Revendications**

1. Dispositif de transmission de données avec au moins une tension d'alimentation ($U_B$), un émetteur (11), un récepteur (13) contenant un circuit comparateur (25), une liaison de transmission de données bifilaire différentielle (12) terminée par son impédance caractéristique, ainsi qu'un réseau de résistances, qui est connecté, d'une part, à l'entrée négative et à l'entrée positive du circuit comparateur (25) et, d'autre part, aux fils de transmission (18, 21) de la liaison de transmission de données (12) et à l'émetteur (11), la liaison de transmission de données (12) étant adaptée, de telle sorte qu'aux entrées du circuit comparateur (25) soient produits des niveaux inverses et un niveau absolu en cas de défaillance d'une ligne de transmission, caractérisé en ce qu'une résistance d'adaptation (24) du récepteur (13) est connectée, côté entrée, au premier fil de transmission (18) et, côté sortie, à un diviseur de tension (27) constitué de deux résistances (28, 29) et à l'entrée négative d'un comparateur (25), l'autre résistance d'adaptation (26) du récepteur (13) est connectée, côté entrée, à l'autre fil de transmission (21) et, côté sortie, à un diviseur de tension (35) constitué de deux résistances (30, 31) et à l'entrée positive du comparateur (25), qui délivre le signal de sortie du récepteur (13), les diviseurs de tension (27, 35) étant alimentés par des tensions d'alimentation dont les potentiels de référence sont égaux.

2. Dispositif de transmission de données selon la revendication 1, caractérisé en ce que l'émetteur (11) présente, pour l'injection des données dans la liaison de transmission de données (12), des transistors (14, 15) et, pour chaque transistor (14, 15) un montage en série de diodes (16, 19) et de résistances (17, 20), chacun des montages en série étant connecté aux fils de transmission (18, 21) de la ligne de transmission (12).

3. Dispositif de transmission de données selon la revendication 2, caractérisé en ce que la différence de tension entre les fils de transmission (18, 21) adopte des niveaux inverses dans le cas d'une transmission de données et que la liaison de transmission de données (12) est terminée à chacune de ses extrémités par une résistance de terminaison (22, 23) correspondant à son impédance caractéristique respective.

4. Dispositif de transmission de données selon la revendication 3, caractérisé en ce qu'une adaptation des diviseurs de tension formés des résistances (17, 20) de l'émetteur (11) et de la liaison de transmission (12) et des diviseurs de tension (27, 35) du récepteur (13) est assurée via les résistances d'adaptation (24, 26), de telle sorte que des niveaux inverses apparaissent et que, lors d'une défaillance d'un fil de transmission (18) ou (21), un niveau absolu s'égalise automatiquement dans le comparateur (25).

5. Dispositif de transmission de données selon la revendication 4, caractérisé en ce que l'émetteur (11) et la liaison de transmission de données (12) présentent entre les potentiels de la tension d'alimentation ($U_B$) un réseau de résistances qui est constitué d'un montage en série d'une résistance (17) de l'émetteur (11), d'un montage en parallèle des résistances de terminaison (22, 23) et de l'autre résistance (20) de l'émetteur (11), et les résistances d'adaptation (24, 26) du récepteur (13) sont connectées devant ou derrière le montage en parallèle des résistances de terminaison (22, 23).

6. Dispositif de transmission de données selon l'une quelconque des revendications précédentes, caractérisé en ce que, lors d'une transmission de niveaux récessifs alors que les transistors (14, 15) de l'émetteur (11) sont bloquants, on applique à chaque fil de transmission (18, 21) environ la moitié de la tension d'alimentation ($U_B$) et, dans le cas de niveaux dominants alors que les transistors (14, 15) sont passants, on applique une tension symétrique par rapport à la moitié de la tension d'alimentation ($U_B$) sur les fils de transmission (18, 21).

7. Dispositif de transmission de données selon la revendication 6, caractérisé en ce qu'à l'aide des grandeurs auxiliaires $U_3=U_B R_{29}/(R_{28}+R_{29})$, $U_4=U_B R_{31}/(R_{30}+R_{31})$ avec $U_4$ supérieur à $U_3$ et la résistance de substitution $R_{E1}=R_{28} R_{29}/(R_{28}+R_{29})=R_{30} R_{31}/(R_{30}+R_{31})$ et l'autre résistance de substitution $R_{E2}=R_{23} R_{22}/(R_{23}+R_{22})$, une égalisation automatique est assurée en cas de défaillance d'un fil de transmission (18 ou 21) lorsque $R_{24}=R_{26}\leqq R_{E1}((U_{1d}-U_3)/(U_4-U_3+U_k)-1)$, la valeur admise la plus petite pour les résistances d'adaptation (24, 25) résultant de la condition $R_{24}=R_{26}\geqq R_{E1}U_K/(U_4-U_3-U_K)-R_{E2}/2$, où $U_K$ représente la tension d'entrée du comparateur (25) et $U_{1d}$, la tension $U_1$ dans le cas d'un signal dominant.

8. Dispositif de transmission de données selon l'une quelconque des revendications précédentes, caractérisé en ce que les débits de données transmis se situent dans la plage des vitesses de transmission de quelques Mbits par seconde dans le cas de lignes de transmission longues par rapport aux longueurs d'onde.

9. Dispositif de transmission de données selon l'une quelconque des revendications précédentes, caractérisé en ce que les résistances de terminaison (22, 23) s'écartent de la valeur de l'impédance caractéristique et, en fonction de la tension d'alimentation ($U_B$), du type des transistors (14, 15), des diodes (16, 19) et du comparateur (15), des débits de données plus élevés que quelques Mbits par seconde sont autorisés.

FIG.1

FIG.2

FIG.3